# EUROPEAN PATENT APPLICATION

(11) **EP 4 734 158 A1**
(43) Date of publication of application: **29.04.2026**
(21) Application number: 24856776.0
(22) Date of filing: 19.08.2024
(51) Int. Cl.: H01M 4/04, H01M 10/04, G06Q 50/04, G01B 7/004, B65H 43/04

(54) **BATTERY MANUFACTURING SYSTEM**

(30) Priority: 21.08.2023 KR 20230109065
(71) Applicant: LG Energy Solution, Ltd., Seoul 07335 (KR)
(72) Inventor: PARK, Su Wan, Daejeon 34122 (KR); SU, Jun Hyo, Daejeon 34122 (KR); HAN, Ki Deok, Daejeon 34122 (KR); JEON, Gi Yeong, Daejeon 34122 (KR); LEE, Jae Hwan, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/012282
(87) International publication number: WO 2025/042165

(57) **Abstract**

A battery manufacturing system includes an electrode process device for performing an electrode process; and a roll map creating device for creating a roll map including coordinate value data indicating locations on an electrode and measurement and inspection data generated as the electrode process is performed on the electrode and matched to the coordinate value data, where the roll map creating device receives an input of a defect location of the electrode and generates tag coordinates of a tag corresponding to the defect location, define, based on the tag coordinates, a leading removal criteria coordinate leading to the tag coordinates and a following removal criteria coordinate following the tag coordinates, and create a surviving electrode roll map excluding electrode removal sections between the leading removal criteria coordinate and the following removal criteria coordinate.

## Description

### [Cross-Reference to Related Applications]

The present application is a National Phase entry of International Application PCT/KR2024/012282 filed on August 19, 2024, which claims priority from Korean Patent Application No. 10-2023-0109065, filed on August 21, 2023, the disclosures of which are incorporated herein by reference.

### [Technical Field]

The present disclosure relates to a battery manufacturing system, and more particularly to a battery manufacturing system that may increase the reliability of production data by accurately managing the amount of discard in electrode manufacturing.

### [Background]

With the technological development and increasing demand for electric vehicles, the demand for secondary batteries is also increasing rapidly. Lithium secondary batteries are widely used as an energy source for various mobile devices as well as various electronic products because of the high energy density and operating voltage, as well as excellent preservation and lifespan characteristics.

In the manufacturing process of a battery, including the electrode process and the assembly process, it may be necessary to trace back through the overall process when an issue such as a defect, etc., occurs in a semi-finished or finished battery. In other words, it is necessary to identify from which process each component of the battery cell being traced is originated.

In order to more easily identify the cause of defects, there is a need to improve the reliability of data related to production while ensuring cell traceability in the complex battery manufacturing process.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

The present disclosure is directed to provide a battery manufacturing system that may increase the reliability of production data by accurately managing the amount of discard in electrode manufacturing.

The present disclosure, in order to solve the technical problem, provides a battery manufacturing system including an electrode process device for performing an electrode process; and a roll map creating device for creating a roll map including coordinate value data indicating locations on an electrode and measurement and inspection data generated as the electrode process is performed on the electrode and matched to the coordinate value data, wherein the roll map creating device receiving an input of a defect location of the electrode and generating tag coordinates of a tag corresponding to the defect location, wherein defining, based on the tag coordinates, a leading removal criteria coordinate leading to the tag coordinates and a following removal criteria coordinate following the tag coordinates, and configured to create a surviving electrode roll map excluding an electrode removal section between the leading removal criteria coordinate and the following removal criteria coordinate.

In some embodiments, a relatively leading first tag and a relatively following second tag are present on the electrode based on the direction of progress of the electrode process, and the roll map creating device may be configured to define a section between a leading removal criteria coordinate of the first tag and a following removal criteria coordinate of the second tag as a merged electrode removal section when the first electrode removal section corresponding to the first tag and the second electrode removal section corresponding to the second tag at least partially overlap.

In some embodiments, a third tag following relatively to the second tag is further present on the electrode, and the roll map creating device may be configured to update the merged electrode removal section by merging a third electrode removal section to the merged electrode removal section when the third electrode removal section corresponding to the third tag overlaps at least partially with the merged electrode removal section.

In some embodiments, a third tag following relatively to the merged electrode removal section is further present on the electrode, and the roll map creating device may be configured to update the merged electrode removal section by merging a third electrode removal section to the merged electrode removal section when the third electrode removal section corresponding to the third tag overlaps at least partially with the merged electrode removal section.

In some embodiments, when the attribute of the electrode defect is continuousness, the roll map creating device may be configured to assign tags at a predetermined interval while the continuous defect lasts.

In some embodiments, the predetermined interval may be within a distance between a following removal criteria coordinate and a leading removal criteria coordinate assigned to one tag coordinate.

In some embodiments, the electrode process may be a roll-press process.

Another aspect of the present disclosure provides a battery manufacturing system including an electrode process device for performing an electrode process; a roll map creating device for creating a roll map that includes coordinate value data indicating locations on an electrode and measurement and inspection data generated as the electrode process is performed on the electrode and matched to the coordinate value data; and a measuring instrument configured to capture images of the electrode to identify defect locations, wherein the roll map creating device is configured to receive defect locations from the measuring instrument and calculate an electrode removal section, wherein the measuring instrument is configured to assign a tag to the location where the defect occurred when the attribute of the defect found on the electrode is a point defect in the direction of progress of the electrode, and when the attribute of the defect found on the electrode is a continuous defect, it is configured to assign tags at a predetermined interval while the continuous defect lasts.

In some embodiments, the roll map creating device may be configured to define a leading removal criteria coordinate leading to a tag coordinate of the tag and a following removal criteria coordinate following the tag coordinate when the attribute of the defect is a point defect, and configured to define a section between the leading removal criteria coordinate and the following removal criteria coordinate as an electrode removal section.

In some embodiments, the roll map creating device may be configured to define a merged electrode removal section by merging a non-overlapping section of any one of the two electrode removal sections to the other electrode removal section when the electrode removal section overlaps another defective electrode removal section.

In some embodiments, the roll map creating device may be configured to define leading removal criteria coordinate leading to tag coordinates of the most leading tags and following removal criteria coordinate following tag coordinates of the most following tags assigned at predetermined intervals when the attribute of the defect is a continuous defect, and configured to define a section between the leading removal criteria coordinate and the following removal criteria coordinate as the merged electrode removal section.

In some embodiments, when one or more other defects are identified in addition to the continuous defect within the merged electrode removal section, the roll map creating device may be configured to calculate an electrode removal section for each of the one or more other defects.

In some embodiments, by merging a non-overlapping section of the calculated electrode removal section for each of the one or more other defects with the merged electrode removal section, the roll map creating device may be configured to update the merged electrode removal section

In some embodiments, the roll map creating device may be configured to update the merged electrode removal section of continuous defects by merging a non-overlapping section of the other defect electrode removal section with the merged electrode removal section of continuous defects when the other defect electrode removal section overlaps the merged electrode removal section of continuous defects.

In some embodiments, the roll map creating device may be configured to define a new merged electrode removal section by merging a non-overlapping section of the merged electrode removal section of the other defects with the merged electrode removal section of continuous defects when the merged electrode removal section of the other defects overlaps the merged electrode removal section of continuous defects.

According to another aspect of the present disclosure, a battery manufacturing method includes generating tag coordinates of tag corresponding to defect locations on an electrode; and defining a leading removal criteria coordinate leading to the tag coordinate and a following removal criteria coordinate following the tag coordinate, and creating a surviving electrode roll map that excludes an electrode removal section between the leading and following removal criteria coordinates.

In some embodiments, when a relatively leading first tag and a relatively following second tag are present on the electrode based on the direction of progress of the electrode process, and when the first electrode removal section corresponding to the first tag and the second electrode removal section corresponding to the second tag at least partially overlap, the creating of the surviving electrode roll map further includes defining a section between a leading removal criteria coordinate of the first tag and a following removal criteria coordinate of the second tag as a merged electrode removal section.

In some embodiments, the creating of a surviving electrode roll map further comprises, when a third tag following relatively to the merged electrode removal section is further present on the electrode and when the third electrode removal section corresponding to the third tag overlaps at least partially with the merged electrode removal section, a step of updating the merged electrode removal section by merging the third electrode removal section with the merged electrode removal section.

The battery manufacturing system of the present disclosure has the effect of increasing the reliability of production data by accurately managing the amount of discard in electrode manufacturing.

However, the technical effects that can be obtained in exemplary embodiments of the present disclosure is not limited to the above-described effects, and other effects not mentioned can be clearly understood by a person skilled in the art from the description of the disclosure described below. In other words, unintended effects of implementing the exemplary embodiments of the present disclosure may also be derived from the exemplary embodiments of the present disclosure by a person skilled in the art.

### [Brief Description of the Drawings]

FIG. 1 is a conceptual perspective view schematically illustrating the state of an electrode undergoing an electrode manufacturing process.
FIG. 2 is a conceptual view illustrating a roll map created in an electrode manufacturing process according to an embodiment of the present disclosure.
FIG. 3 is a schematic diagram conceptually illustrating a battery manufacturing system according to an embodiment of the present disclosure.
FIGS. 4 to 6a are schematic diagrams conceptually illustrating a surviving electrode roll map according to embodiments of the present disclosure, respectively.
FIG. 6b is a conceptual view illustrating the same portion of the roll map of the embodiment of FIG. 6a, with corresponding portions of the description shown for clarity of description.
FIG. 7 is a schematic diagram conceptually illustrating a surviving electrode roll map according to another embodiment of the present disclosure.
FIG. 8 is a conceptual view illustrating a merged electrode removal section merged with a third electrode removal section according to an embodiment of the present disclosure.
FIGS. 9 to 13 are schematic diagrams conceptually illustrating a surviving electrode roll map according to another embodiment of the present disclosure, respectively.

### [Detailed Description]

Hereinafter, preferred embodiments of the present disclosure concept will be described in detail with reference to the accompanying drawings. However, embodiments of the present disclosure concept may be modified in various different forms, and it should not be interpreted that the scope of the present disclosure concept is limited by the embodiments described below. It is preferred that the embodiments of the present disclosure be interpreted as provided to explain the present disclosure more fully to a person skilled in the art. Herein, the same reference numerals may refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific embodiments and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, may have the same meaning as commonly understood by a person skilled in the art of the technical field to which the present disclosure concept belongs. In addition, it should be understood that terms such as commonly used, dictionary-defined terms may be construed to have a meaning consistent with the meaning they have in the context of the technology to which they relate and should not to be construed in an excessively formal sense unless explicitly defined herein.

Specific process sequences may be performed differently from the order described when some embodiments are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, embodiments of the present disclosure should not be construed as limited to the specific forms of the areas shown herein, and should include, for example, variations in form resulting from manufacturing processes. All terms "and/or" used herein are included each and every combination of one or more of the components mentioned.

In addition, as used herein, the term "substrate" may mean the substrate itself, or a stacked structure including the substrate, and a predetermined layer or film formed on the surface thereof. In addition, the term "surface of the substrate" as used herein may refer to an exposed surface of the substrate itself, or to an outer surface of a predetermined layer or film, etc., formed on the substrate.

### (first embodiment)

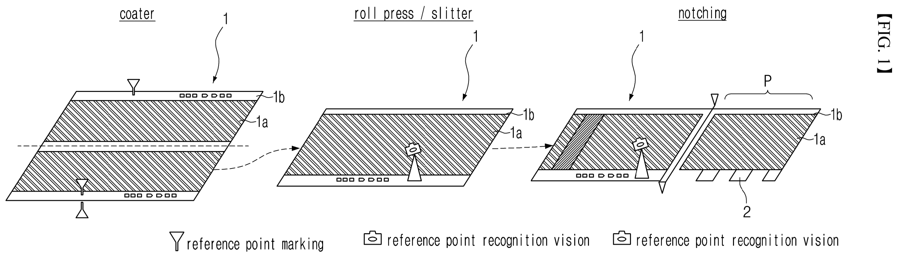

FIG. 1 is a conceptual perspective view schematically illustrating the state of an electrode undergoing an electrode manufacturing process.

Referring to FIG. 1, a coating electrode 1 is manufactured by coating an active material on the overall current collector in a coater C to form a coating part 1a. An uncoated part 1b, which is not coated with the active material, may be marked with a reference point. In some embodiments, the active material may be coated on both the top side and the back side of the electrode 1. The coating roll 1 may be pressurized by a press roll in a roll pressing process and may be cut along a longitudinal direction of the electrode 1 by a slitter in a slitting process.

Then, in a notching process, the electrode tabs 2 may be formed by punching by a press or the like. In the notching process, the electrode tabs 2 are formed per unit electrode so that they can be cut per unit electrode manufactured into a battery cell, or so that they can be cut in a subsequent process. The width of the unit electrode corresponds to the pitch P processed by the press.

Such an electrode manufacturing process is performed by a series of roll-to-roll processes in which the electrodes unwound from the unwinder are moved and wound in the rewinder, in other words, the electrodes are moved from the unwinder to the rewinder and coated, and the electrodes are wound in the rewinder to complete the electrode roll of the coating process. Next, the electrode roll is mounted on an unwinder of the roll-press process and moves to a rewinder of the roll press process. The electrode roll is wound on the rewinder of the roll-press process and is completed as an electrode roll of the roll-press process. Then, the electrode roll may be unwound from the unwinder of a subsequent process (e.g., a second roll-press process, a slitting process, or a notching process, etc.) and, after a predetermined process, may be wound again on the rewinder of the subsequent process to be completed as an electrode roll of the subsequent process. In this way, the electrode manufacturing process may include a series of roll-to-roll processes in which the electrode rolls unwound from the unwinder are moved and wound in the rewinder (so-called roll-to-roll processes) are repeated sequentially.

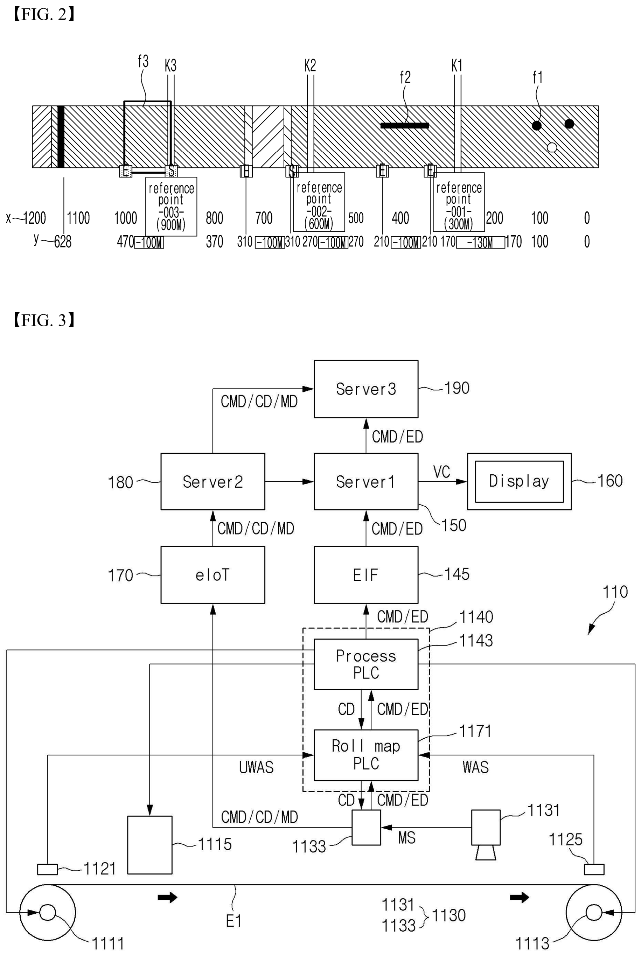

FIG. 2 is a conceptual view illustrating a roll map created in an electrode manufacturing process according to an embodiment of the present disclosure.

As described above, electrodes are progressed in a roll-to-roll method in a coating process, a roll-press process, a slitting process, and the like. A roll map simulating such a progress of the electrode is shown in the bar form, and on the roll map, a longitudinal direction position and a width direction position of the electrode are shown as coordinates, in other words, the roll map is defined on a coordinate plane having two coordinate axes, a longitudinal direction axis and a width direction axis of the electrode, and each position of the electrode on the coordinate plane may be represented by a coordinate value on the coordinate plane. In such a roll map, information regarding defects, quality, electrode breakage, and the like occurring in the electrode manufacturing process is stored along with the coordinates, thereby facilitating visualization of data related to quality or defects in the electrode manufacturing process briefly.

Referring to FIG. 2, information on external defects such as pinhole defects f1 and line defects f2 are visualized and displayed at the coordinates where the defects occurred. In addition, a mismatch part f3 of a coating part and an uncoated part is also shown. Other loading volume defects are also shown, and the part where the electrode was disused at the outermost edge is also shown.

In addition, reference points K1, K2, K3 may be marked on the electrode 1 at predetermined intervals. When a fracture occurs in the electrode 1 and a seam connection member is connected thereto, the electrode length is reduced by the fractured length. As described above, points occurred external defects can also be removed so that the operator can connect them. The roll map may also simulate such a situation and modify the coordinates on the roll map. Referring now to FIG. 2, coordinates that do not reflect the electrode roll removal as described above and coordinates that do are shown together in one roll map. The former is referred to as the absolute coordinate (x) and the latter as the relative coordinate (y). As shown in FIG. 2, the relative coordinate (y) and the absolute coordinate (x) may be displayed in parallel on a single roll map, but may also be represented separately. The roll map labeled with the relative coordinates (y) represents the state of the physical electrode.

Such roll maps may be created for each of the individual processes described above. However, since the electrode wound in the preceding process is unwound in the following process, the beginning and end of the electrode are reversed during the roll-to-roll process, such that the end of the roll map representing the electrode roll of the preceding process becomes the beginning of the roll map representing the electrode roll of the following process.

In addition, in the case of a two-side electrode in which the electrode active material is coated on both sides of the electrode, the surface of the electrode may be reversed, such as the top side electrode in the preceding process becoming the back side electrode in the following process. In other words, depending on the winding direction of the electrode in the preceding process and the unwinding direction of the electrode in the following process, the starting point and end point of the electrode may be reversed, and the surface may be reversed. Since the roll maps of each process are created based on these reversed electrodes, the coordinates of the roll maps of each process are also reversed from each other.

In addition, the length of the electrode is changed by cutting and connecting the electrode several times in the longitudinal direction, such as by removing a defective section or a broken section during a series of roll-to-roll processes. The roll maps of each process reflect these reverses and length changes, and thus may have different coordinate values.

At the final stage of the electrode process, only the remaining electrodes (surviving electrodes) are left after excluding the parts of the electrodes removed in the previous process. Since the battery is manufactured with the surviving electrodes, if a problem occurs in a finished or semi-finished battery, the cause of the problem may be traced by referring to the roll map of the final surviving electrodes. In addition, the electrode portion from which the problem is derived may be traced backwards by referring to the roll map of each process described above. As such, the roll map is a useful tool for quality and defect identification as well as quality tracking.

FIG. 3 is a schematic diagram conceptually illustrating a battery manufacturing system according to an embodiment of the present disclosure.

Referring to FIG. 3, the battery manufacturing system includes an electrode process device 110 that performs an electrode process. In some embodiments, the electrode process device 110 may be a roll-to-roll process device.

The electrode process device 110 may include an unwinder 1111, a rewinder 1113, a processing machine 1115, a first rotary encoder 1121, a second rotary encoder 1125, an inspection and/or measuring instrument 1130, and a process programmable logic controller (PLC) 1143.

The unwinder 1111 may be provided with electrode rolls manufactured in a previous electrode process, and the unwinder 1111 may be configured to unwind the electrode rolls. The rewinder 1113 may be configured to wind electrodes E1 that have been unwound from the unwinder 1111 and processed by the electrode process. The electrode process may be, for example, a coating process, a roll-press process, a notching process, or the like, but is not limited thereto.

The first rotary encoder 1121 may be configured to detect the extent to which the electrode has been unwound by the unwinder 1111. The first rotary encoder 1121 may be configured to be a contact type or a non-contact type. In some embodiments, the first rotary encoder 1121 may be configured to sense the length by which the electrode has been unwound by the unwinder 1111. Accordingly, the first rotary encoder 1121 may be configured to generate an unwinding amount signal (UWAS) representative of the length to which the electrode has been unwound and transmit it to a roll map PLC 1171, described in more detail hereinafter. The roll map PLC 1171 may be configured to collect unwinding amount data based on the received unwinding amount signal (UWAS).

The second rotary encoder 1125 may be configured to detect the extent to which the electrode has been wound by the second rewinder 1113. The second rotary encoder 1125 may be configured to be a contact type or a non-contact type. In some embodiments, the second rotary encoder 1125 may be configured to sense the length by which the electrode has been wound by the second rewinder 1113. Accordingly, the second rotary encoder 1125 may be configured to generate a winding amount signal (WAS) representative of the length to which the electrode has been wound and transmit it to a roll map PLC 1171, described in more detail hereinafter. The roll map PLC 1171 may be configured to collect winding amount data based on the received winding amount signal (WAS).

The inspection and/or measuring instrument 1130 may be configured to inspect and/or measure the electrode E1 to collect inspection and/or measurement data (MD) of the electrode E1 as it is transferred from the unwinder 1111 to the rewinder 1113. The term "inspection and/or measuring instrument" includes any one or all of an inspection device, a measuring instrument, and an inspection and measuring instrument, depending on the purpose of the measurement. In addition, the term "inspection and/or measurement data" is meant to include any one or all of inspection data, measurement data, and inspection/measurement data. Finally, inspection and/or measurement data refers to all data that may be obtained through inspection and/or measurement of an electrode. In addition, inspection and/or measuring instrument refers to all mechanisms for inspecting or measuring an electrode to obtain specific inspection and/or measurement data.

The inspection and/or measurement data of the electrode E1 mentioned in the present disclosure may include data regarding the quality or defects of the electrode E1. For example, when the electrode process device 110 is a coating device, measurement data regarding the electrode slurry loading amount, inspection data regarding pinhole defects or line defects, and the like may be obtained. When the loading amount is outside the set range, this location may be determined as a defect, and a tag may be assigned and/or visually displayed to distinguish it from other parts. The inspection and/or measurement data of the present disclosure is not limited to defects and may also include data regarding quality. For example, specific examples of inspection and/or measurement data that may be obtained in an electrode process may be as follows.
i) Data regarding at least one of the electrode dimensions and width,
ii) Data regarding a mismatch between the coating portion and the uncoated portion of the electrode,
iii) Slurry loading amount data on the electrode,
iv) Data regarding the appearance of the electrode,
v) Data regarding the location of electrode break sections or the connection locations between electrodes,
vi) Data regarding the location of the sample inspection part,
vii) Data regarding the location of the electrode discard section,
viii) Data regarding insulation quality or defects in the insulation material coating process performed after electrode slurry coating,
ix) Other defect data
x) Data regarding reference points marked on the electrode at predetermined intervals
xi) Data regarding the electrode thickness after roll pressing

In some embodiments, the inspection and/or measuring instrument 1130 may inspect and/or measure electrode E1 in a scanning method. In some embodiments, the inspection and/or measuring instrument 1130 may move along a width direction of the electrode E1. In some embodiments, during a one-time scanning of the inspection and/or measuring instrument 1130, the inspection and/or measuring instrument 1130 may move from one end of the width direction of the electrode E1 to the other end of the width direction. While the inspection and/or measuring instrument 1130 is performing the scanning of the width direction, the electrode E1 may be moved in a longitudinal direction of the electrode by the unwinder 1111 and the rewinder 1113.

The processing machine 1115 may be any processing device capable of performing, for example, a coating process, a roll-press process, a notching process, and the like. For example, when the electrode process illustrated in FIG. 3 is a coating process, the processing machine 1115 may be a coater. For example, when the electrode process illustrated in FIG. 3 is a roll-press process, the processing machine 1115 may be a roll-press device. For example, when the electrode process illustrated in FIG. 3 is a notching process, the processing machine 1115 may be a notching device.

In some embodiments, when the processing machine 1115 is a roll-press device, the processing machine 1115 may include a pair of rollers configured to apply a predetermined pressure toward each other with the electrode E1 therebetween.

In some embodiments, when said processing machine 1115 is a notching machine, said processing machine 1115 may be a press device for notching, for example, including a driving part configured to move a notching mold up and down in a regular cycle, and as said notching mold moves down, it may punch an edge of the electrode E1 to form a lead tab of a predetermined shape (e.g., rectangular).

The inspection and/or measurement data MD may include an inspection result expressed numerically. For example, the inspection and/or measurement data MD may include coordinates and dimensions of a defective portion on the electrode E1. In some embodiments, said inspection and/or measurement data (MD) may further include loading amount data of the coating material on the electrode, dimensional data such as a width of an insulating material provided on the coating material and an overlap width between said coating material and said insulating material, and mismatching data between the coating portion lanes on the top surface of the electrode and the coating portion lanes on the lower surface of the electrode. Here, the loading amount refers to the amount of coating material loaded per unit area of the electrode E1, which may be an area density of the coating material. The inspection and/or measurement data MD may be processed in a set method, such that a positive or negative amount of the inspected and/or measured portion of the electrode may be determined

The inspection and/or measuring instrument 1130 may include a sensing part 1131 and a processing part 1133. The sensing part 1131 may be configured to sense a physical quantity of the electrode E1 to generate an inspection and/or measurement signal MS. For example, the sensing part 1131 may include a time delay and integration (TDI) camera, a complementary metal oxide semiconductor (CMOS) image sensor, a time of flight (TOF) sensor, etc.

The sensing part 1131 may also include an emitter and receiver configured to perform measurements using non-destructive signals, such as ultrasound, microwaves, terahertz waves, infrared light, etc. In some embodiments, the sensing part 1131 may include analog and/or digital sensors, such as biosensors, chemical sensors, composition sensors, current and/or power meters, air quality sensors, gas sensors, hall effect sensors, brightness level sensors, optical sensors, etc. In some embodiments, the inspection and/or measuring instrument 1130 may also include pressure sensors, temperature sensors, ultrasonic sensors, proximity sensors, door status sensors, motion tracking sensors, humidity sensors, visible and infrared sensors, cameras, etc.

The inspection and/or measurement data (MD) described above may be time series data. In other words, the inspection and/or measurement data (MD) may be temporally ordered. Temporal ordering is a major characteristic of time series data, in which events are organized in the order in which they occur and arrive for processing. In other words, the inspection and/or measurement data (MD) may be stored based on a time point at which the inspection and/or measurement were performed, and the inspection and/or measurement data (MD) may be related to time. In addition, the inspection and/or measurement data (MD) data may be related to a position on the electrode identified based on the reference point.

The processing part 1133 may be configured to collect the inspection and/or measurement signals MS sensed by the sensing part 1131 to generate the inspection and/or measurement data (MD). The processing part 1133 may be wired or wirelessly connected to the sensing part 1131.

The roll map PLC 1171 may be in operative communication with the first and second rotary encoders 1121, 1125, the inspection and/or measuring instrument 1130, and additional measuring instruments and inspection devices through a data network, either wired or wireless. The data network may be one-way or two-way. The data network may be implemented by a public and/or specialized network using physical channels, Wi-Fi, Bluetooth, and/or other frequency bands. The first and second rotary encoders 1121, 1125, the measuring instrument 1130, and additional measuring instruments and inspection devices may be configured to collect data from the equipment, work products, semi-finished products, and products within the electrode process device 110, or to generate signals for collecting data.

The roll map PLC 1171 may be configured to transmit coordinate data (CD) to the processing part 1133. The processing part 1133 may be configured to associate inspection and/or measurement data (MD) with the coordinate data (CD) to generate coordinate-associated measurement data (CMD). In general, the inspection and/or measurement data (MD) may be processed based on the trigger points. Examples of processing the inspection and/or measurement data (MD) may include storing the inspection and/or measurement data (MD), manipulating the inspection and/or measurement data (MD) (e.g., generating coordinate-associated inspection and/or measurement data (CMD)), and transmitting the inspection and/or measurement data (MD).

As a non-limiting example, the trigger point for processing the inspection and/or measurement data (MD) may be the completion of scanning. For example, the sensing part 1131 may scan the electrode in a width direction of the electrode, and for each scanning, the inspection and/or measurement data (MD) may be stored, processed, modulated, and transmitted. In other examples, the trigger point may be the completion of a plurality of scanning, or the completion of a portion of scanning.

The processing part 1133 may be configured to transmit the coordinate-associated inspection and/or measurement data (CMD) to the roll map PLC 1171. The roll map PLC 1171 may be configured to transmit the coordinate-associated inspection and/or measurement data (CMD) to the process PLC 1143.

The coordinate-associated inspection and/or measurement data (CMD) transmitted to the process PLC 1143 may be conveyed to the first server 150 through the process PLC 1143 and the equipment interface (EIF) 145. The process PLC 1143 and the EIF 145 may relay communication of data, including coordinate-associated inspection and/or measurement data (CMD) between the first server 150 and the roll map PLC 1171. However, not limited thereto, the first roll map PLC 1171 may be configured to transmit coordinate-associated inspection and/or measurement data (CMD) directly to the first server 150.

The process PLC 1143 may be configured to control the operation of the unwinder 1111 and the rewinder 1113, and the processing machine 1115. The process PLC 1143 may be configured to generate signals for operating and stopping the unwinder 1111 and the rewinder 1113, and the processing machine 1115.

In some embodiments, each of the roll map PLC 1171 and the process PLC 1143 may be part of one PLC, the first PLC 1140.

For control of the electrode process illustrated in FIG. 3, a communication channel may be installed between the process PLC 1143 and the first server 150 via the EIF 145 and connecting the process PLC 1143 and the first server 150. Accordingly, the data transmission through the process PLC 1143 may be performed by the first and second rotary encoders 1121, 1125 and the inspection and/or measuring instrument 1130 directly transmitting the unwinding amount signal (UWAS), winding amount signal (WAS), and inspection and/or measurement signal (MS) to the first server 150, and compared to the case in which the roll map PLC 1171 directly transmits the coordinate-associated inspection and/or measurement data (MD) to the first server 150, the resources needed for the installation of communication channels may be reduced, and the data processing and management may be efficiently performed.

The EIF 145 may be a device for communication between the process PLC 1143 of the manufacturing facility and the first server 150, which is an upper server.

In some embodiments, the first server 150 may include a roll map creating part configured to generate a roll map. The roll map may be a process data of the electrode E1 on a plane simulating the electrode E1 moving between the unwinder 1111 and the rewinder 1113. In this case, the first server 150 may act as a roll map creating device.

In some embodiments, the roll map PLC 1171 may include a roll map creating part configured to generate the roll map. In this case, the roll map PLC 1171 may act as a roll map creating device. Hereinafter, the case in which the first server 150 creates the roll map will be described. However, the roll map PLC 1171 may also be configured to create a roll map in an identical, equivalent, or analogous method to the configuration associated with the first server 150 creating the roll map.

The roll map may be generated in a lot unit formed by winding and cutting of the electrode E1. The roll map may include data on specifications of the lots. The specifications of the lot may include, for example, a lot number, a length of the wound electrode, a winding direction of an electrode roll, an unwinding direction of the electrode roll, a width of the electrode, and a material and composition used in the processing of the electrode.

In some embodiments, the electrode process illustrated in FIG. 3 may be a roll-press process. In this case, the roll map may be a roll map for the roll press process.

In other embodiments, the electrode process illustrated in FIG. 3 may be a notching process. In this case, the roll map may be a roll map for the notching process.

According to exemplary embodiments, the first server 150 may be a data processing system that supports various activities necessary to manage the manufacturing of the secondary battery, such as work schedule management, work instructions, quality management, work performance aggregation, and the like. The first server 150 may be, for example, a manufacturing execution system (MES). The first server 150 may be configured to perform input, processing, output, and communication of data needed for electrode assembly, such as a notching process, a cutting process, and a stacking process.

The first server 150 may generate a visualization command (VC) for visualizing the roll map. The first server 150 may convey the visualization command (VC) to the display device 160, and the display device 160 may visualize the roll map to display the visualized roll map.

In some embodiments, the processing part 1133 may be configured to convey coordinate-associated inspection and/or measurement data (CMD) and/or coordinate data (CD) to the second server 180. According to exemplary embodiments, the coordinate-associated inspection and/or measurement data (CMD) and coordinate data (CD) may be conveyed to the second server 180 via the eIoT 170. The eIoT 170 may be a device for communication between the processing part 1133 and the second server 180.

In some embodiments, the second server 180 may be configured to store and process inspection and/or measurement data (MD) of the electrodes. The second server 180 may continuously monitor the processing of the electrodes based on the inspection and/or measurement data MD, thereby managing the quality of the processing of the electrodes. According to exemplary embodiments, the second server 180 may be a statistical process controller (SPC). By collecting and analyzing manufacturing data nearly in real-time, the second server 180 may timely identify problem conditions and provide alarms to operators before potential problems occur.

The third server 190 may be configured to store coordinate-associated inspection and/or measurement data (CMD) transmitted from the first server 150. The third server 190 may be configured to store inspection and/or measurement data (MD) transmitted from the second server 180. When the first server 150 is an MES and the second server 180 is an SPC, they may be unsuitable for long-term storage of the coordinate-associated inspection and/or measurement data (CMD), evaluation data (ED), and inspection and/or measurement data (MD). The third server 190 may be a data warehouse, for example, and may store the coordinate-associated inspection and/or measurement data (CMD), evaluation data (ED), and inspection and/or measurement data (MD) for a long period of time, such as based on the quality assurance period of a product.

The processing part 1133, the roll map PLC 1171, the process PLC 1143, the EIF 145, the first server 150, the eIoT 170, the second server 180, and the third server 190 may be implemented as hardware, firmware, software, and combinations thereof. For example, the processing part 1133, the roll map PLC 1171, the process PLC 1143, the EIF 145, the first server 150, the eIoT 170, the second server 180, and the third server 190 may include computing devices such as general purpose computers, workstation computers, desktop computers, laptop computers, tablet computers, and the like. The processing part 1133, the roll map PLC 1171, the process PLC 1143, the EIF 145, the first server 150, the eIoT 170, the second server 180, and the third server 190 may include any one of simple controllers, complex processors such as microprocessors, CPU, GPU, and the like, processors configured by software, and dedicated hardware and firmware. The processing part 1133, the roll map PLC 1171, the process PLC 1143, the EIF 145, the first server 150, the eIoT 170, the second server 180, and the third server 190 may be implemented by, for example, general purpose processors or application specific hardware such as Digital Signal Processor (DSP), Field Programmable Gate Array (FPGA), and Application Specific Integrated Circuit (ASIC).

The first server 150 and the second server 180 may generate the roll map, which is a basic roll map, and an intermediate roll map created based on the roll map. Because the first server 150 stores and processes a lot of data for general manufacturing management other than the roll map, the roll map stored on the first server 150 may include processed and simplified coordinate-associated measurement data (CMD) instead of the original inspection and/or measurement data (MD). The second server 180 may store the original inspection and/or measurement data (MD) to operate as an SPC. The second server 180 may transmit inspection and/or measurement data (MD) corresponding to a selected portion of the roll map in response to a command from the first server 150.

The intermediate roll map may further include the inspection and/or measurement data (MD) associated with the roll map; in other words, the intermediate roll map may further include, in addition to the roll map, inspection and/or measurement data (MD) that is the original data. The inspection and/or measurement data (MD) may be associated with the roll map based on a time value. Accordingly, the intermediate roll map may provide additional insight into the quality of the work product, performance of the process, overall equipment effectiveness (OEE) drill-down, anomaly detection, traceability, preventive maintenance, and predictive alarms.

The first server 150, the second server 180, and the third server 190 may include a physical server or a cloud server. The first server 150, the second server 180, and the third server 190 may provide data and analytics results to an operator through various frameworks. The frameworks may include protocols that support transmitting data so that the display device 160 may visualize the data through a user interface and provide updated visualizations as new data is calculated by the first server 150 and the second server 180. The protocol supporting transmitting the data may utilize HTML, JavaScript, and/or JSON.

The first server 150, the second server 180, and the third server 190 may include various Application Programming Interface (API) for storing data in databases and other data management tools. The API may also be used for retrieving data from the databases of various data management systems. The data management system may provide access to the database, pull data from the database, retrieve data from the database, and generate metrics. In this context, metrics are tools for visualizing data. Metrics include time-serial generated measurements and may be used to monitor an application and generate status warnings.

The electrode process device 110 may implement a plug-in architecture with an API for data acquisition to provide plug-and-play connection of the inspection and/or measuring instrument 1130 and additional measuring instruments and inspection devices. Accordingly, resources at a particular process step and at a particular site may be easily relocated to other processes and other sites, or new resources may be easily introduced at each process step and site.

The data network between the elements of the electrode process device 110 may include various types of communication channels, including one-way, two-way wired, and wireless communications. In one example, the data network may include an industrial protocol network such as OPC, Modbus, ProfiNet, etc. The communication channels may be dedicated conduit communications such as Universal Serial Bus (USB), IEEE 802 (Ethernet), IEEE 1394 (FireWire), or other high-speed data communication standards.

In some embodiments, the electrode process device 110 may further comprise a manual input system that allows an operator to input manufacturing data. The electrode process device 110 may allow for data input by an operator using an input tool and computer-based input of manufacturing data, such as scraping an excel file.

According to some embodiments, the operations of the processing part 1133, the roll map PLC 1171, the process PLC 1143, the EIF 145, the first server 150, the eIoT 170, the second server 180, and the third server 190 may be implemented as commands stored on a machine-readable medium that can be read and executed by one or more processors. Here, the machine-readable medium may include any mechanism for storing and/or transmitting information in a form readable by a machine (e.g., a computing device). For example, the machine-readable medium may include Read Only Memory (ROM), Random Access Memory (RAM), magnetic disk storage media, optical storage media, flash memory, electrical, optical, acoustic, or other forms of propagated signals (e.g., carrier waves, infrared signals, digital signals, etc.), and any other signals.

The processing part 1133, the roll map PLC 1171, the process PLC 1143, the EIF 145, the first server 150, the eIoT 170, the second server 180, and the third server 190 may comprise firmware, software, routines, and commands for performing the operations described above, or any of the processes described below. For example, the firmware, software, routines, and commands of the processing part 1133, the roll map PLC 1171, the process PLC 1143, the EIF 145, the first server 150, the eIoT 170, the second server 180, and the third server 190 may be instantiated in memory.

The processing part 1133, for example, may include software configured to receive coordinate data (CD), generate coordinate-associated inspection and/or measurement data (CMD), and transmit inspection and/or measurement data (MD), coordinate data (CD), and coordinate-associated inspection and/or measurement data (CMD).

The roll map PLC 1171, for example, may include software configured to collect coordinate data (CD), receive coordinate-associated inspection and/or measurement data (CMD), and transmit coordinate data (CD) and coordinate-associated inspection and/or measurement data (CMD).

The process PLC 1143 may include software configured to generate control signals for controlling the unwinder 1111, the rewinder 1113, and the processing machine 1115 based on the product ID and the product recipe, receive coordinate data (CD) and coordinate-associated inspection and/or measurement data (CMD), and transmit coordinate data (CD) and coordinate-associated inspection and/or measurement data (CMD).

The EIF 145 may include software for relaying the transmission of data and information between the process PLC 1143 and the first server 150. More specifically, the EIF 145 may include software configured to perform flow control, error control, synchronization, sequence control, addressing, multiplexing, routing, and formatting of communications between the process PLC 1143 and the first server 150.

The first server 150, for example, may include software configured to convey product ID and product recipes to the process PLC 1143 and generate the roll map based on coordinate-associated inspection and/or measurement data (CMD).

The eIoT 170 may include software configured to collect, store, process, and transmit time series data, coordinate data (CD), and/or coordinate-associated inspection and/or measurement data (CMD), such as inspection and/or measurement data (MD).

The second server 180 may include software configured to store time series data, coordinate data (CD), and/or coordinate-associated inspection and/or measurement data (CMD), such as inspection and/or measurement data (MD), monitor a process based on the time series data, coordinate data (CD), and/or coordinate-associated inspection and/or measurement data (CMD), and transmit the time series data, coordinate data (CD), and/or coordinate-associated inspection and/or measurement data (CMD) in response to a request of the first server 150.

The third server 190 may include software configured to receive and store the inspection and/or coordinate-associated measurement data (CMD), evaluation data (ED), and/or inspection and/or measurement data (MD), and retrieve the coordinate-associated inspection and/or measurement data (CMD), evaluation data (ED), and/or inspection and/or measurement data (MD).

However, this is for ease of description only, and the operations of the processing part 1133, the roll map PLC 1171, the process PLC 1143, the EIF 145, the first server 150, the eIoT 170, the second server 180, and the third server 190 described above may be caused by other devices executing computing devices, distributed computing devices, processors, firmware, software, routines and commands, etc.

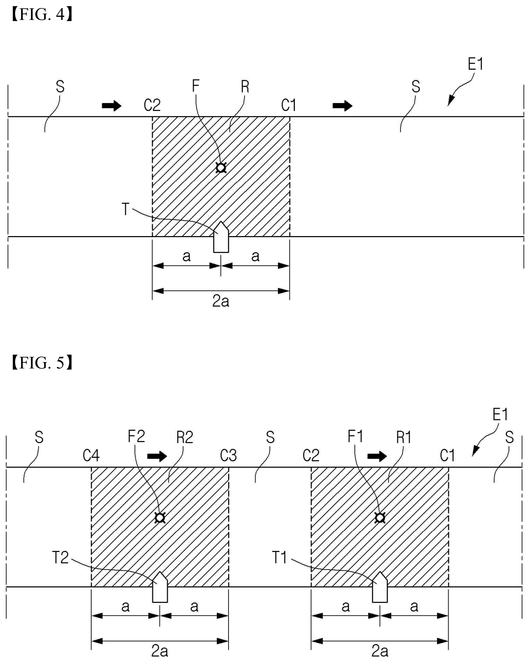

FIG. 4 is a schematic diagram conceptually illustrating a surviving electrode roll map according to an embodiment of the present disclosure.

Referring to FIG. 4, when defects F on the electrode E1 are detected, a tag T is assigned to the corresponding locations. As described above, the defects F on the electrode E1 may be identified by the inspection and/or measuring instrument 1130 (refer to FIG. 3), and the roll map creating device may store tag coordinates corresponding to the identified locations of the defects F on the electrode E1.

The portion in which the defect F of the electrode E1 has occurred needs to be removed. When the portion in which the defect F has occurred is removed, the overall length of the electrode E1 is correspondingly shortened.

Based on the tag coordinates indicating the locations in which the defects F occurred in the electrode E1, a leading removal criteria coordinate C1 leading to the tag coordinates and a following removal criteria coordinate C2 following the tag coordinates may be defined. In addition, a section between the leading removal criteria coordinate C1 and the following removal criteria coordinate C2 may be defined as an electrode removal section R.

The leading removal criteria coordinate C1 may be coordinate leading by a predetermined length a from the tag coordinate. In some embodiments, the following removal criteria coordinate C2 may be coordinate following by a predetermined length a from the tag coordinate. In some embodiments, the length of the electrode removal section R may be 2a, which is twice the predetermined length a.

By excluding the electrode removal section R in the electrode E1, a roll map of the surviving electrode S may be created. In the physical electrode, the electrode between the leading removal criteria coordinate C1 and the following removal criteria coordinate C2 may be cut and discarded, and the end of the leading removal criteria coordinate C1 and the end of the following removal criteria coordinate C2 may be bonded to each other.

FIG. 5 is a schematic diagram conceptually illustrating a surviving electrode roll map according to another embodiment of the present disclosure.

Referring to FIG. 5, a relatively leading first defect F1 and a relatively following second defect F2 may be detected along the direction of progress of the electrode E1. The roll map creating device may assign a first tag T1 to correspond to the location of the first defect F1 and a second tag T2 to correspond to the location of the second defect F2. Moreover, the roll map creating device may store tag coordinates corresponding to the identified locations of the defects F1, F2 on the electrode E1.

Based on the tag coordinates of the first tag T1 indicating the locations in which the first defect F1 occurred in the electrode E1, a leading removal criteria coordinate C1 leading to the tag coordinates and a following removal criteria coordinate C2 following the tag coordinates may be defined. In addition, a section between the leading removal criteria coordinate C1 and the following removal criteria coordinate C2 may be defined as a first electrode removal section R1.

Based on the tag coordinates of the second tag T2 indicating the locations in which the second defect F2 occurred in the electrode E1, a leading removal criteria coordinate C3 leading to the tag coordinates and a following removal criteria coordinate C4 following the tag coordinates may be defined. In addition, a section between the leading removal criteria coordinate C3 and the following removal criteria coordinate C4 may be defined as a second electrode removal section R2.

The leading removal criteria coordinate C1 may be coordinate leading by a predetermined length a from the tag coordinate of the first tag T1. In some embodiments, the following removal criteria coordinate C2 may be coordinate following by a predetermined length a from the tag coordinate of the first tag T1. In some embodiments, the length of the first electrode removal section R1 may be 2a, which is twice the predetermined length a.

The leading removal criteria coordinate C3 may be coordinate leading by the predetermined length a from the tag coordinate of the second tag T2. In some embodiments, the following removal criteria coordinate C4 may be coordinate following by the predetermined length a from the tag coordinate of the second tag T2. In some embodiments, the length of the second electrode removal section R2 may be 2a, which is twice the predetermined length a.

The first electrode removal section R1 and the second electrode removal section R2 may not overlap each other. The roll map creating device may create a roll map of a surviving electrode S from the electrode E1 in which the first electrode removal section R1 and the second electrode removal section R2 are each excluded.

In the physical electrode, the electrode between the leading removal criteria coordinate C1 and the following removal criteria coordinate C2 may be cut and discarded, and the end of the leading removal criteria coordinate C1 and the end of the following removal criteria coordinate C2 may be bonded to each other. In addition, the electrode between the leading removal criteria coordinate C3 and the following removal criteria coordinate C4 may be cut and discarded, and the end of the leading removal criteria coordinate C3 and the end of the the following removal criteria coordinate C4 may be bonded to each other.

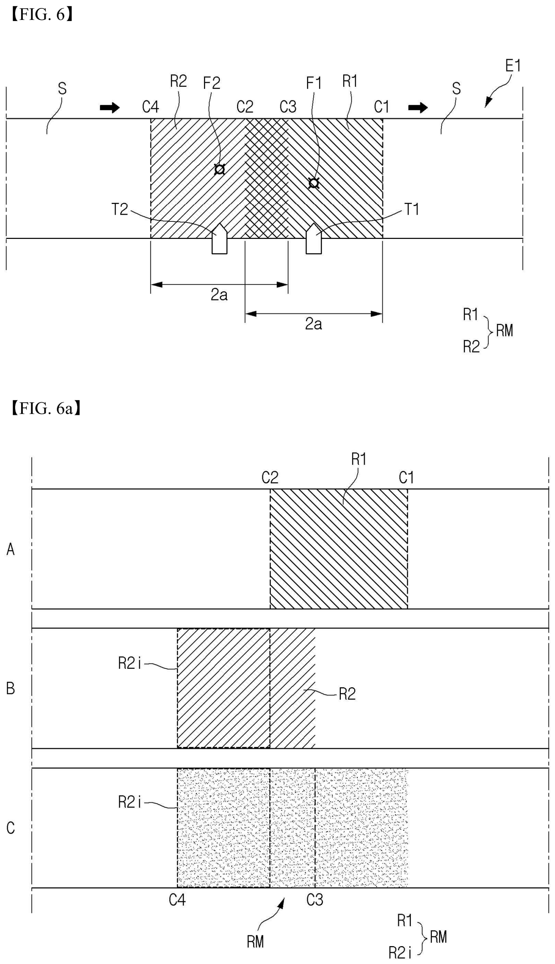

FIG. 6a is a schematic diagram conceptually illustrating a surviving electrode roll map according to another embodiment of the present disclosure. FIG. 6b is a conceptual view illustrating the same portion of the roll map of the embodiment of FIG. 6a, with corresponding portions of the description shown for clarity of description.

Referring to FIG. 6a and FIG. 6b, a relatively leading first defect F1 and a relatively following second defect F2 may be detected along the direction of progress of the electrode E1. The roll map creating device may assign a first tag T1 to correspond to the location of the first defect F1 and a second tag T2 to correspond to the location of the second defect F2. Moreover, the roll map creating device may store tag coordinates corresponding to the identified locations of the defects F1, F2 on the electrode E1.

Based on the tag coordinates of the first tag T1 indicating the locations in which the first defect F1 occurred in the electrode E1, a leading removal criteria coordinate C1 leading to the tag coordinates and a following removal criteria coordinate C2 following the tag coordinates may be defined. In addition, a section between the leading removal criteria coordinate C1 and the following removal criteria coordinate C2 may be defined as a first electrode removal section R1.

Based on the tag coordinates of the second tag T2 indicating the locations in which the second defect F2 occurred in the electrode E1, a leading removal criteria coordinate C3 leading to the tag coordinates and a following removal criteria coordinate C4 following the tag coordinates may be defined. In addition, a section between the leading removal criteria coordinate C3 and the following removal criteria coordinate C4 may be defined as a second electrode removal section R2, based on said tag coordinate.

The leading removal criteria coordinate C1 may be coordinate leading by a predetermined length a from the tag coordinate of the first tag T1. In some embodiments, the following removal criteria coordinate C2 may be coordinate following by a predetermined length a from the tag coordinate of the first tag T1. In some embodiments, the length of the second electrode removal section R1 may be 2a, which is twice the predetermined length a.

The leading removal criteria coordinate C3 may be coordinate leading by the predetermined length a from the tag coordinate of the second tag T2. In some embodiments, the following removal criteria coordinate C4 may be coordinate following by the predetermined length a from the tag coordinate of the second tag T2. In some embodiments, the length of the second electrode removal section R2 may be 2a, which is twice the predetermined length a.

The first electrode removal section R1 and the second electrode removal section R2 may overlap by a predetermined length in the longitudinal direction of the electrode E1. In other words, a portion of the first electrode removal section R1 overlaps the second electrode removal section R2, and a portion of the second electrode removal section R2 overlaps the first electrode removal section R1.

A merged electrode removal section RM may be defined as a section between a leading removal criteria coordinate C1 of the first electrode removal section R1 and the second electrode removal section R2, which is the most leading removal criteria coordinate in said first electrode removal section R1, and a following removal criteria coordinate C4 of the second electrode removal section R2, which is the most following removal criteria coordinate in the second electrode removal section R2. The merged electrode removal section RM may be overall removed from the electrode E1. The roll map creating device may create a roll map of the surviving electrode S in which the merged electrode removal section RM is removed from the electrode E1.

A in FIG. 6b indicates a first electrode removal section R1. The first electrode removal section R1 may be a section between a leading removal criteria coordinate C1 and a following removal criteria coordinate C2 corresponding to the first tag T1.

B in FIG. 6b indicates a second electrode removal section R2. The second electrode removal section R2 may be a section between a leading removal criteria coordinate C3 and a following removal criteria coordinate C4 corresponding to the second tag T2. The second electrode removal section R2 may have a non-overlapping section R2i with the first electrode removal section R1.

C in FIG. 6b indicates a merged electrode removal section RM in which the first electrode removal section R1 and the second electrode removal section R2 are merged. As shown in C, a merged electrode removal section RM may be obtained by adding the non-overlapping section R2i to the first electrode removal section R1.

In the physical electrode, the electrode between the leading removal criteria coordinate C1 and the following removal criteria coordinate C4 of the merged electrode removal section RM may be cut and discarded, and the ends of the leading removal criteria coordinate C1 and the following removal criteria coordinate C4 may be bonded to each other.

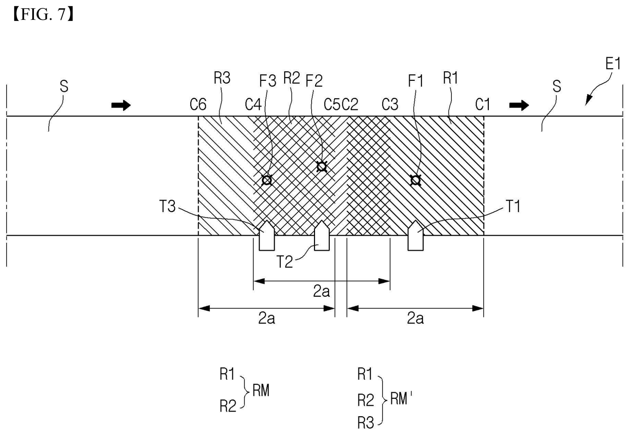

FIG. 7 is a schematic diagram conceptually illustrating a surviving electrode roll map according to another embodiment of the present disclosure.

The embodiment of FIG. 7 differs from the embodiment of FIG. 6a in that a third defect F3 is added. Therefore, hereinafter, the description will focus on such differences and omit the description of the common parts

Referring to FIG. 7, a third defect F3 following the first defect F1 and the second defect F2 along the direction of progress of the electrode E1 may be detected. However, the third defect F3 may be located within a merged electrode removal section RM derived from the first defect F1 and the second defect F2.

The roll map creating device may assign a third tag T3 to correspond to the location of the third defect F3. Further, the roll map creating device may store tag coordinates corresponding to the identified locations of the third defect F3.

Based on the tag coordinates of the third tag T3 indicating the locations in which the third defect F3 occurred in the electrode E1, a leading removal criteria coordinate C5 leading to the tag coordinates and a following removal criteria coordinate C6 following the tag coordinates may be defined. In addition, a section between the leading removal criteria coordinate C5 and the following removal criteria coordinate C6 may be defined as a third electrode removal section R3.

The leading removal criteria coordinate C5 may be coordinate leading by a predetermined length a from the tag coordinate of the third tag T3. In some embodiments, the following removal criteria coordinate C6 may be coordinate following by the predetermined length a from the tag coordinate of the third tag T3. In some embodiments, the length of the third electrode removal section R3 may be 2a, which is twice the predetermined length a.

The leading removal criteria coordinate C5 may be leading the following removal criteria coordinate C4 of the second electrode removal section R2. The following removal criteria coordinate C6 may be following the following removal criteria coordinate C4 of the second electrode removal section R2.

The leading removal criteria coordinate C5 may be leading the most following removal criteria coordinate C4 of the merged electrode removal section RM. The following removal criteria coordinate C6 may be following the most following removal criteria coordinate C4 of the merged electrode removal section RM.

The third electrode removal section R3 may overlap the merged electrode removal section RM and the electrode E1 by a predetermined length in the longitudinal direction of the electrode E1. In other words, a portion of the third electrode removal section R3 overlaps the merged electrode removal section RM, and a portion of the merged electrode removal section RM overlaps the third electrode removal section R3.

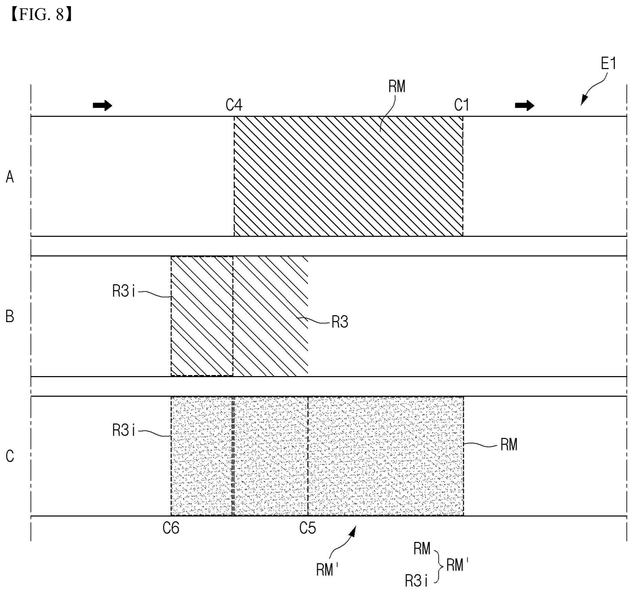

By merging the merged electrode removal section RM and the third electrode removal section R3, an updated merged electrode removal section RM' may be defined. FIG. 8 is a conceptual view illustrating a merged electrode removal section merged with a third electrode removal section according to an embodiment of the present disclosure.

Referring to FIG. 8, an updated merged electrode removal section RM' may be obtained by adding a non-overlapping section R3i (refer to FIG. B), which is a non-overlapping section with the merged electrode removal section RM' in the third electrode removal section R3, to the merged electrode removal section RM' (refer to FIG. C). In some embodiments, the most leading removal criteria coordinate C1 in the merged electrode removal section RM may be selected as the leading removal criteria coordinate of the updated merged electrode removal section RM'. Further, the following removal criteria coordinate C6 of the third electrode removal section R3 may be selected as a following removal criteria coordinate of the updated merged electrode removal section RM'.

As a result, an updated merged electrode removal section RM' may be formed by a section between a leading removal criteria coordinate C1 of the first electrode removal section R1, which is the most leading removal criteria coordinate in the first to third electrode removal sections R1, R2, R3, and a following removal criteria coordinate C6 of the third electrode removal section R3, which is the most following removal criteria coordinate. The merged electrode removal section RM' may be overall removed from the electrode E1. The roll map creating device may create a roll map of the surviving electrode S in which the merged electrode removal section RM' is removed from the electrode E1.

The electrode between the leading removal criteria coordinate C1 and the following removal criteria coordinate C6 of the merged electrode removal section RM' from the physical electrode may be cut and discarded, and the ends of the leading removal criteria coordinate C1 and the following removal criteria coordinate C6 may be bonded to each other.

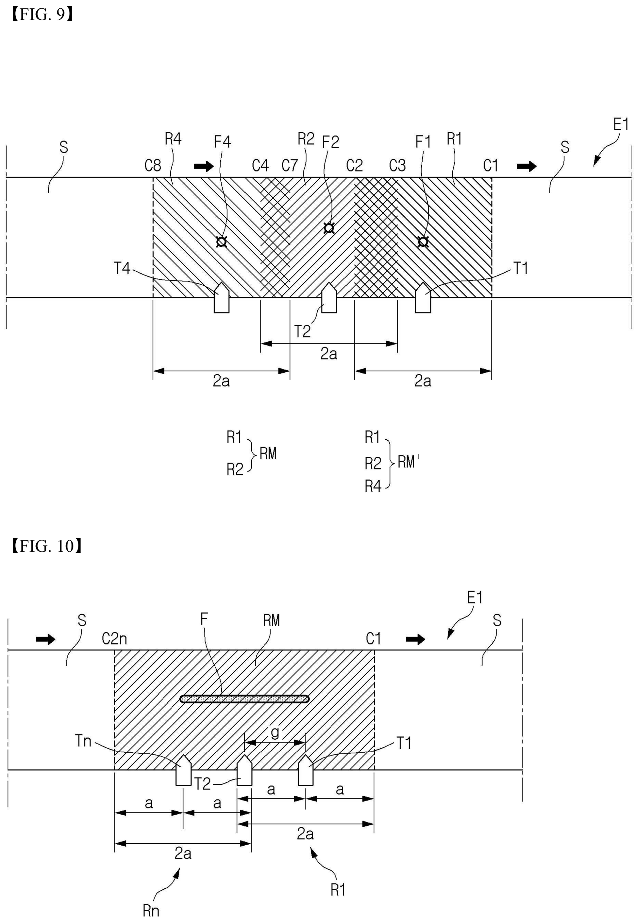

FIG. 9 is a schematic diagram conceptually illustrating a surviving electrode roll map according to another embodiment of the present disclosure. The embodiment of FIG. 9 differs from the embodiment of FIG. 7 in that a fourth defect F4 is added following the merged electrode removal section RM. Therefore, hereinafter, the description will focus on such differences and omit the description of the common parts.

Referring to FIG. 9, a fourth defect F4 following the merged electrode removal section RM may be detected along the direction of progress of the electrode E1. The roll map creating device may assign a fourth tag T4 to correspond to the location of the fourth defect F4. Further, the roll map creating device may store tag coordinates corresponding to the identified locations of the fourth defect F4.

Based on the tag coordinates of the fourth tag T4 indicating the locations in which the fourth defect F4 occurred in the electrode E1, a leading removal criteria coordinate C7 leading to the tag coordinates and a following removal criteria coordinate C8 following the tag coordinates may be defined. In addition, a section between the leading removal criteria coordinate C7 and the following removal criteria coordinate C68 may be defined as a fourth electrode removal section R4.

The leading removal criteria coordinate C7 may be a coordinate leading by a predetermined length a from the tag coordinate of the fourth tag T4. In some embodiments, the following removal criteria coordinate C8 may be coordinate following by the predetermined length a from the tag coordinate of the fourth tag T4. In some embodiments, the length of said fourth electrode removal section R4 may be 2a, which is twice the predetermined length a.

The leading removal criteria coordinate C7 may be leading to the following removal criteria coordinate C4 of the second electrode removal section R2. The following removal criteria coordinate C8 may be following the following removal criteria coordinate C4 of the second electrode removal section R2.

The leading removal criteria coordinate C7 may be leading the most following removal criteria coordinate C4 of the merged electrode removal section RM. The following removal criteria coordinate C8 may be following the most following removal criteria coordinate C4 of the merged electrode removal section RM.

The fourth electrode removal section R4 may overlap the merged electrode removal section RM and the electrode E1 by a predetermined length in the longitudinal direction. In other words, a portion of the fourth electrode removal section R4 overlaps the merged electrode removal section RM, and a portion of the merged electrode removal section RM overlaps the fourth electrode removal section R4.

By merging the merged electrode removal section RM and the fourth electrode removal section R4, an updated merged electrode removal section RM' may be defined. The merging of the merged electrode removal section RM and the fourth electrode removal section R4 may be performed in the same method as described with reference to FIG. 8.

In this case, the section between the leading removal criteria coordinate C1 of the first electrode removal section R1, which is the most leading removal criteria coordinate in the first, second, and fourth electrode removal sections R1, R2, and R4, and the following removal criteria coordinate C8 of the fourth electrode removal section R4, which is the most following removal criteria coordinate, may form an updated merged electrode removal section RM'. The merged electrode removal section RM' may be overall removed from the electrode E1. The roll map creating device may create a roll map of the surviving electrode S in which the merged electrode removal section RM' is removed from the electrode E1.

The electrode between the leading removal criteria coordinate C1 and the following removal criteria coordinate C8 of the merged electrode removal section RM' from the physical electrode may be cut and discarded, and the ends of the leading removal criteria coordinate C1 and the following removal criteria coordinate C8 may be bonded to each other.

### (second embodiment)

FIG. 10 is a schematic diagram conceptually illustrating a surviving electrode roll map according to another embodiment of the present disclosure. The embodiment illustrated in FIG. 10 differs from the embodiment illustrated in FIG. 4 in that the attributes of the defect are continuous. In other words, the defect F in the embodiment illustrated in FIG. 4 is a point defect in which the location may be specified by any one coordinate. On the other hand, the defect F in the embodiment shown in FIG. 10 is a continuous defect that is difficult to be specified by any one coordinate because it extends in the longitudinal direction of the electrode E1.

Referring to FIG. 10, two or more tags T1, T2, ..., Tn may be assigned when a continuous defect F on the electrode E1 is detected. In other words, two or more tags T1, T2, . . ., Tn may be assigned at predetermined intervals g while the continuous defect F on the electrode E1 continues in the longitudinal direction of the electrode E1.

The defects F on the electrode E1 may be identified by the inspection and/or measuring instrument 1130 (refer to FIG. 3), and the roll map creating device may assign a first tag T1 at the location where the defect F on the electrode E1 is first identified, assign a second tag T2 at a predetermined interval g, and assign a nth tag Tn at the location where the defect F ends. In addition, the roll map creating device may store tag coordinates corresponding to each of the tags T1, T2, . . ., Tn.

Based on the first tag T1, a leading removal criteria coordinate C1 may be defined. In some embodiments, the following removal criteria coordinate may be defined based on the first tag T1. In addition, a section between the leading removal criteria coordinate C1 and the following removal criteria coordinate may be defined as the electrode removal section R1 for the first tag T1.

The leading removal criteria coordinate C1 may be coordinate leading by a predetermined length a from the tag coordinates. In some embodiments, the following removal criteria coordinate may be a coordinate following by a predetermined length a from the tag coordinate. In some embodiments, the length of the electrode removal section R may be 2a, which is twice the predetermined length a.

In some embodiments, the electrode removal sections may be defined for the second tag T2 to the nth tag Tn in the same manner as for the first tag T1.

Specifically, a following removal criteria coordinate C2n may be defined based on the nth tag Tn. In some embodiments, a leading removal criteria coordinate may be defined based on the nth tag Tn. Further, a section between the leading removal criteria coordinate and the following removal criteria coordinate C2n may be defined as an electrode removal section Rn for the nth tag Tn.

The roll map creating device may be configured to merge each of the electrode removal sections to yield a merged electrode removal section RM, as described with reference to FIGS. 6b and 8.

The interval g between the two or more tags T1, T2, ..., Tn being granted may be less than or equal to 2a, which is the length of the electrode removal section for one tag.

In some embodiments, the roll map creating device may be configured to define as a merged electrode removal section RM a section between a leading removal criteria coordinate C1 corresponding to the most leading assigned tag, i.e., the first tag T1 , and a following removal criteria coordinate C2n corresponding to the most following assigned tag, i.e., the nth tag Tn , when the defect F is a continuous defect.

The leading removal criteria coordinate C1 may be coordinate leading by a predetermined length a from the tag coordinates of the first tag T1. The following removal criteria coordinate C2n may be coordinate following by a predetermined length a from the tag coordinates of the nth tag Tn. In some embodiments, the length of the merged electrode removal section RM may be a length equal to the distance between the first tag T1 and the nth tag Tn added to 2a.

The merged electrode removal section RM may be overall removed from the electrode E1 to remove the defect F. The roll map creating device may create a roll map of the surviving electrode S in which the merged electrode removal section RM is removed from the electrode E1.

The electrode between the leading removal criteria coordinate C1 and the following removal criteria coordinate C2n of the merged electrode removal section RM in the physical electrode may be cut and discarded, and the ends of the leading removal criteria coordinate C1 and the following removal criteria coordinate C2n may be bonded to each other.

### (third embodiment)

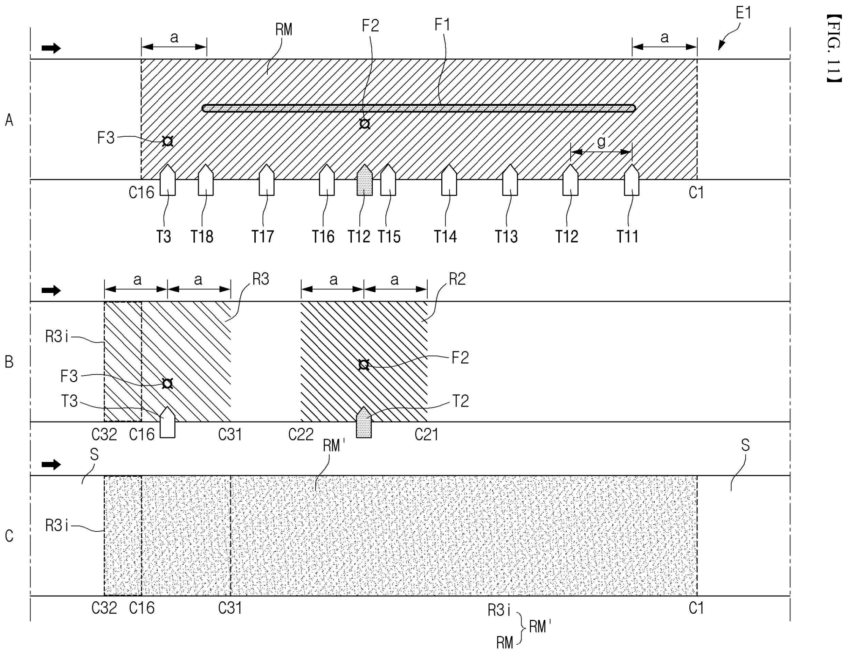

FIG. 11 is a schematic diagram conceptually illustrating a surviving electrode roll map according to another embodiment of the present disclosure.

Referring to FIG. 11, a first defect F1, which is a continuous defect, and a second defect F2 and a third defect F3, which are point defects, may be detected on the electrode E1. The second defect F2 overlaps with the first defect F1 in the longitudinal direction of the electrode E1, and the third defect F3 does not overlap with the first defect F1 in the longitudinal direction of the electrode E1.

As described with reference to FIG. 10, two or more tags T11, T12, ..., T18 may be assigned at a predetermined interval g in the first defect F1, which is a continuous defect.

The first defect F1 on the electrode E1 may be identified by the inspection and/or measuring instrument 1130 (refer to FIG. 3), and the roll map creating device may assign a first tag T11 to the location where the first defect F1 on the electrode E1 is first identified, assign a second tag T12 at a predetermined interval g, and assign an eighth tag T18 to the location where the defect F ends. In addition, the roll map creating device may store tag coordinates corresponding to each of the tags T11, T12, ..., T18. A person skilled in the art will understand that more or less tags may be assigned depending on the degree of extension in the longitudinal direction of the electrode E1 of the first defect F1, and the size of the interval g assigning the tags.

As shown in A of FIG. 11, a leading removal criteria coordinate C1 may be defined based on the first tag T11, which is the most leading tag among the tags assigned to the first defect F1. In some embodiments, a following removal criteria coordinate may be defined based on the first tag T11. The leading removal criteria coordinate C1 may be coordinate leading by a predetermined length a from the tag coordinates of the first tag T11.

A following removal criteria coordinate C16 may be defined based on the eighth tag T18, which is the most following tag among the tags assigned for the first defect F1. The following removal criteria coordinate C16 may be a coordinate following by a predetermined length a from the tag coordinates of the eighth tag T18.

The roll map creating device, as described with reference to FIGS. 6b and 8, may be configured to merge the electrode removal sections of each tag assigned to the first defect F1 to yield a merged electrode removal section RM. This is described in detail with reference to FIG. 10, and therefore additional description is omitted herein.

In some embodiments, the roll map creating device may be configured to define as a merged electrode removal section RM the section between the leading removal criteria coordinate C1 corresponding to the most leading tag assigned to the first defect F1 that occurred, in other words, the first tag T11, and the following removal criteria coordinate C16 corresponding to the most following tag assigned to the first defect F1 that occurred, in other words, the eighth tag T18.

As shown in B of FIG. 11, the roll map creating device may assign a corresponding ninth tag T2 and a corresponding tenth tag T3 to each of the second defect F2 and the third defect F3, which are point defects, and store the corresponding tag coordinates.

The ninth tag T2 corresponding to the second defect F2 overlaps with the first defect F1 itself, which is a continuous defect. In some embodiments, the roll map creating device may be configured to not separately calculate electrode removal sections for continuous defects and overlapping defects, such as for the second defect F2.

In some other embodiments, the roll map creating device may define a leading removal criteria coordinate C21 and a following removal criteria coordinate C22 corresponding to the tag coordinates for the second defect F2. In addition, a section between the leading removal criteria coordinate C21 and the following removal criteria coordinate C22 may be defined as a second electrode removal section R2.

The leading removal criteria coordinate C21 may be coordinate leading by a predetermined length a from the tag coordinates. In some embodiments, the following removal criteria coordinate C22 may be coordinate following by a predetermined length a from the tag coordinates. In some embodiments, the length of the second electrode removal section R2 may be 2a, which is twice the predetermined length a.

In some embodiments, the second electrode removal section R2 may be completely overlapping within the merged electrode removal section RM in the longitudinal direction of the electrode E1, and thus may not have any effect on determining the length of the electrode being removed.

The tenth tag T3 corresponding to the third defect F3, which does not overlap with the first defect F1 itself, which is a continuous defect, but belongs within the merged electrode removal section RM defined with respect to the first defect F1. The roll map creating device may be configured to calculate an electrode removal section for each of the one or more other defects identified that belong within the merged electrode removal section RM in addition to the first defect F1.

In some embodiments, the roll map creating device may define a leading removal criteria coordinate C31 and a following removal criteria coordinate C32 corresponding to tag coordinates of the tenth tag T3 for the third defect F3. Further, a section between the leading removal criteria coordinate C31 and the following removal criteria coordinate C32 may be defined as the third electrode removal section R3.

The leading removal criteria coordinate C31 may be coordinate leading by a predetermined length a from the tag coordinates of the tenth tag T3. In some embodiments, the following removal criteria coordinate C32 may be coordinate following by a predetermined length a from the tag coordinates of the tenth tag T3. In some embodiments, the length of the second electrode removal section R3 may be 2a, which is twice the predetermined length a.

The leading removal criteria coordinate C31 may be leading to the most following removal criteria coordinate C16 of the merged electrode removal section RM for the first defect F1. The following removal criteria coordinate C32 may be following the most following removal criteria coordinate C16 of the merged electrode removal section RM for the first defect F1.

The third electrode removal section R3 may overlap the merged electrode removal section RM and the electrode E1 by a predetermined length in the longitudinal direction of the electrode E1. In other words, a portion of the third electrode removal section R3 overlaps the merged electrode removal section RM, and a portion of the merged electrode removal section RM overlaps the third electrode removal section R3.

As shown in C of FIG. 11, an updated merged electrode removal section RM' may be defined by merging the merged electrode removal section RM with the third electrode removal section R3.

An updated merged electrode removal section RM' may be obtained by adding a non-overlapping section R3i, which is a non-overlapping section with the merged electrode removal section RM' in the third electrode removal section R3, to the merged electrode removal section RM. In some embodiments, the most leading removal criteria coordinate C1 in the merged electrode removal section RM may be selected as the leading removal criteria coordinate of the updated merged electrode removal section RM'. Further, a following removal criteria coordinate C32 of the third electrode removal section R3 may be selected as a following removal criteria coordinate of the updated merged electrode removal section RM'.

As a result, the section between the leading removal criteria coordinate C1 of the merged electrode removal section RM and the third electrode removal section R3, which is the most leading removal criteria coordinate in the merged electrode removal section RM, and the following removal criteria coordinate C32 of the third electrode removal section R3, which is the most following removal criteria coordinate in the third electrode removal section R3, may form the updated merged electrode removal section RM'. The merged electrode removal section RM' may be overall removed from the electrode E1. The roll map creating device may create a roll map of the surviving electrode S with the merged electrode removal section RM' removed from the electrode E1.

The electrode between the leading removal criteria coordinate C1 and the following removal criteria coordinate C32 of the merged electrode removal section RM' from the physical electrode may be cut and discarded, and the ends of the leading removal criteria coordinate C1 and the following removal criteria coordinate C32 may be bonded to each other.

### (fourth embodiment)

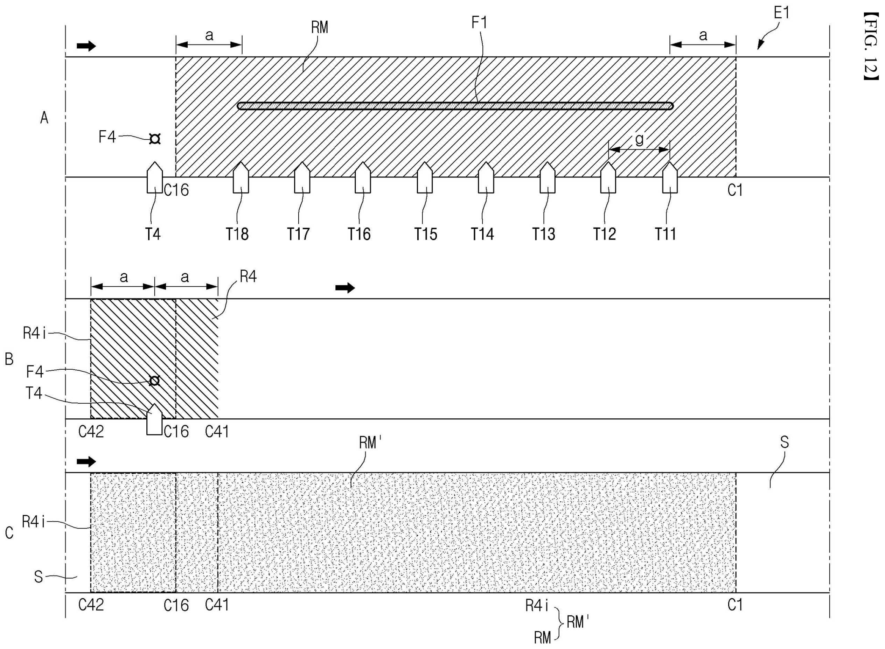

FIG. 12 is a schematic diagram conceptually illustrating a surviving electrode roll map according to another embodiment of the present disclosure.

Referring to FIG. 12, a first defect F1, which is a continuous defect, and a fourth defect F4, which is a point defect, may be detected on the electrode E1. The fourth defect F4 does not overlap with the first defect F1 in the longitudinal direction of the electrode E1 and does not overlap with the merged electrode removal section RM corresponding to the first defect F1. However, as will be described later, the electrode removal section corresponding to the fourth defect F4 may partially overlap with the merged electrode removal section RM corresponding to the first defect F1.

As described with reference to FIG. 10, two or more tags T11, T12, ..., T18 may be assigned at a predetermined interval g in the first defect F1 which is a continuous defect.

The first defect F1 on the electrode E1 may be identified by inspection and/or measuring instrument 1130 (refer to FIG. 3), and the roll map creating device may assign a first tag T11 at the location where the first defect F1 on the electrode E1 is first identified, assign a second tag T12 at a predetermined interval g, and assign an eighth tag T18 at the location where the defect F ends. In addition, the roll map creating device may store tag coordinates corresponding to each of the tags T11, T12, ..., T18. A person skilled in the art will understand that more or fewer tags may be assigned depending on the degree of extension in the longitudinal direction of the electrode E1 of the first defect F1, and the size of the interval g for assigning the tags.

As shown in A of FIG. 12, a leading removal criteria coordinate C1 may be defined based on the first tag T11, which is the most leading tag among the tags assigned to the first defect F1. In some embodiments, a following removal criteria coordinate may be defined based on the first tag T11. The leading removal criteria coordinate C1 may be coordinate leading by a predetermined length a from the tag coordinates of the first tag T11.

A following removal criteria coordinate C16 may be defined based on the eighth tag T18, which is the most following tag among the tags assigned for the first defect F1. The following removal criteria coordinate C16 may be coordinate following by a predetermined length a from the tag coordinates of the eighth tag T18.

The roll map creating device, as described with reference to FIGS. 6b and 8, may be configured to merge the electrode removal sections of each tag assigned for the first defect F to yield a merged electrode removal section RM. This is described in detail with reference to FIG. 10, and thus additional description is omitted herein.

In some embodiments, the roll map creating device may be configured to define the section between the leading removal criteria coordinate C1 corresponding to the most leading tag assigned to the first defect F1 that occurred, in other words, the first tag T11, and the following removal criteria coordinate C16 corresponding to the most following tag assigned, in other words, the eighth tag T18, as the merged electrode removal section RM.

As shown in B of FIG. 12, the roll map creating device may assign a corresponding eleventh tag T4 to the fourth defect F4, which is a point defect, and store the corresponding tag coordinates.

The eleventh tag T4 corresponding to the fourth defect F4 does not overlap with the first defect F1 itself, which is a continuous defect. Also, the eleventh tag T4 corresponding to the first defect F1 does not belong within the merged electrode removal section RM defined related to the first defect F1. However, the electrode removal section corresponding to the eleventh tag T4 (the fourth electrode removal section R4 described hereinafter) partially overlaps with the merged electrode removal section RM defined related to the first defect F1. The roll map creating device is configured to generate an updated merged electrode removal section RM' by merging the electrode removal section of another defect with the merged electrode removal section RM of the first defect F1 when the other defect other than the first defect F1 partially overlaps with the merged electrode removal section RM of the first defect F1.

In some embodiments, the roll map creating device may define leading removal criteria coordinate C41 and following removal criteria coordinate C42 corresponding to tag coordinates of the eleventh tag T4 for the fourth defect F4. In addition, a section between the leading removal criteria coordinate C41 and the following removal criteria coordinate C42 may be defined as the fourth electrode removal section R4.

The leading removal criteria coordinate C41 may be coordinate leading by a predetermined length a from the tag coordinates of the eleventh tag T4. In some embodiments, the following removal criteria coordinate C42 may be coordinate following by a predetermined length a from the tag coordinates of the eleventh tag T4. In some embodiments, the length of the fourth electrode removal section R4 may be 2a, which is twice the predetermined length a.

The leading removal criteria coordinate C41 may be leading to the most following removal criteria coordinate C16 of the merged electrode removal section RM for the first defect F1. The following removal criteria coordinate C42 may be following the most following removal criteria coordinate C16 of the merged electrode removal section RM for the first defect F1.

The fourth electrode removal section R4 may overlap the merged electrode removal section RM and the electrode E1 by a predetermined length in the longitudinal direction of the electrode E1. In other words, a portion of the fourth electrode removal section R4 overlaps the merged electrode removal section RM, and a portion of the merged electrode removal section RM overlaps the fourth electrode removal section R4.

As shown in C of FIG. 12, an updated merged electrode removal section RM' may be defined by merging the above-described merged electrode removal section RM and the fourth electrode removal section R4.

The updated merged electrode removal section RM' may be obtained by adding a non-overlapping section R4i, which is a non-overlapping section with the merged electrode removal section RM in the fourth electrode removal section R4 to the merged electrode removal section RM. In some embodiments, the most leading removal criteria coordinate C1 in the merged electrode removal section RM may be selected as the leading removal criteria coordinate of the updated merged electrode removal section RM'. Moreover, a following removal criteria coordinate C42 of the fourth electrode removal section R4 may be selected as a following removal criteria coordinate of the updated merged electrode removal section RM'.

As a result, an updated merged electrode removal section RM' may be formed by a section between a leading removal criteria coordinate C1 of the merged electrode removal section RM which is the most leading removal criteria coordinate in the merged electrode removal section RM and the fourth electrode removal section R4, and a following removal criteria coordinate C42 of the fourth electrode removal section R4 which is the most following removal criteria coordinate. The merged electrode removal section RM' may be overall removed from the electrode E1. The roll map creating device may create a roll map of the surviving electrode S with the merged electrode removal section RM' removed from the electrode E1.

The electrode between the most leading removal criteria coordinate C1 and the most following removal criteria coordinate C42 of the merged electrode removal section RM' in the physical electrode may be cut and discarded, and the ends of the leading removal criteria coordinate C1 and the following removal criteria coordinate C42 may be bonded to each other.

### (fifth embodiment)

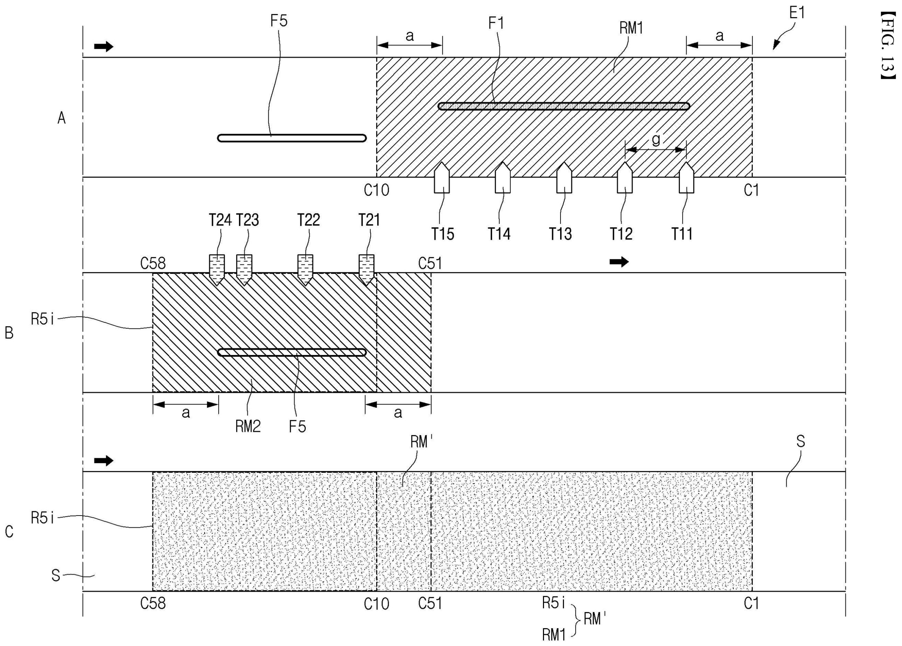

FIG. 13 is a schematic diagram conceptually illustrating a surviving electrode roll map according to another embodiment of the present disclosure.

Referring to FIG. 13, a first defect F1 and a fifth defect F5, which are continuous defects on the electrode E1, may be detected. The fifth defect F5 does not overlap with the first defect F1 in the longitudinal direction of the electrode E1, and does not overlap with the first merged electrode removal section RM1 corresponding to the first defect F1. However, as will be described later, the electrode removal section corresponding to the fifth defect F5 (in other words, the second merged electrode removal section RM2) may partially overlap with the first merged electrode removal section RM1 corresponding to the first defect F1.

In the first defect F1, two or more tags T11, T12, ..., T15 may be assigned in a predetermined interval g. Also, in the fifth defect F5, two or more tags T21, T22, ..., T24 may be given at a predetermined interval.

As shown in A of FIG. 13, the first defect F1 on the electrode E1 may be identified by the inspection and/or measuring instrument 1130 (refer to FIG. 3), and the roll map creating device may assign a first tag T11 at the location where the first defect F1 on the electrode E1 is first identified, assign a second tag T12 at a predetermined interval g, and assign a fifth tag T15 at the location where the defect F ends. In addition, the roll map creating device may store tag coordinates corresponding to each of the tags T11, T12, . . ., T15. A person skilled in the art will understand that more or fewer tags may be assigned depending on the degree of extension in the longitudinal direction of the electrode E1 of the first defect F1, and the size of the interval g for assigning the tags.

As shown in B of FIG. 13, a fifth defect F5 on the electrode E1 may be identified by the inspection and/or measuring instrument 1130 (refer to FIG. 3), and the roll map creating device may assign a first tag T21 at the location where the first defect F1 on the electrode E1 is first identified, assign a second tag T22 at a predetermined interval, and assign a third tag T24 at the location where the defect F ends. In addition, the roll map creating device may store tag coordinates corresponding to each of the tags T21 , T22, ..., T24. A person skilled in the art will understand that more or fewer tags may be assigned depending on the degree of extension in the longitudinal direction of the electrode E1 of the fifth defect F5, and the size of the interval for assigning the tags.

A leading removal criteria coordinate C1 may be defined based on a first tag T11, which is the most leading tag among the tags assigned for the first defect F1. In some embodiments, a following removal criteria coordinate may be defined based on the first tag T11. The leading removal criteria coordinate C1 may be a coordinate leading by a predetermined length a from the tag coordinates of the first tag T11.

A following removal criteria coordinate C10 may be defined based on the fifth tag T15, which is the most following tag among the tags assigned for the first defect F1. The following removal criteria coordinate C10 may be coordinate following by a predetermined length a from the tag coordinates of the fifth tag T15.

The roll map creating device, as described with reference to FIGS. 6b and 8, may be configured to merge the electrode removal sections of each tag assigned for the first defect F1 to yield a first merged electrode removal section RM1. This is described in detail with reference to FIG. 10, and thus additional description is omitted herein.

In some embodiments, the roll map creating device may be configured to define the section between the leading removal criteria coordinate C1 corresponding to the most leading tag assigned to the occurred first defect F1, in other words, the first tag T11, and the following removal criteria coordinate C10 corresponding to the most following tag assigned to the occurred first defect F1, in other words, the fifth tag T15, as the first merged electrode removal section RM1.

The twenty-first tag T21 to twenty-fourth tag T24 corresponding to the fifth defect F5 does not overlap with the first defect F1 itself, which is a continuous defect. In addition, the twenty-first tag T21 to the twenty-fourth tag T24 does not belong within the first merged electrode removal section RM1 defined related to said first defect F1. However, the electrode removal section corresponding to the fifth defect F5 (in other words, the second merged electrode removal section RM2) partially overlaps with the first merged electrode removal section RM1 defined related to the first defect F1. When a merged electrode removal section of a defect other than the first defect F1 partially overlaps with the first merged electrode removal section RM1 of the first defect F1, the roll map creating device is configured to merge the merged electrode removal section of the other defect with the first merged electrode removal section RM1 to generate an updated merged electrode removal section RM'

A leading removal criteria coordinate C51 may be defined based on a twenty-first tag T21 , which is the most leading tag among the tags assigned for the fifth defect F5. In some embodiments, a following removal criteria coordinate may be defined based on the twenty-first tag T21. The leading removal criteria coordinate C51 may be coordinate leading by a predetermined length a from the tag coordinates of the twenty-first tag T21.

A following removal criteria coordinate C58 may be defined based on a twenty-fourth tag T24, which is the most following tag among the tags assigned for the fifth defect F5. The following removal criteria coordinate C58 may be coordinate following by a predetermined length a from the tag coordinates of the twenty-fourth tag T24.

The roll map creating device, as described with reference to FIGS. 6b and 8, may be configured to merge the electrode removal sections of each tag assigned for the fifth defect F5 to yield a second merged electrode removal section RM2. This is substantially the same as described in detail with reference to FIG. 10, and thus additional description is omitted here.

In some embodiments, the roll map creating device may be configured to define the section between the most leading assigned tag for the occurred fifth defect F5, i.e., the leading removal criteria coordinate C51 corresponding to the twenty-first tag T21 , and the most following assigned tag, i.e., the following removal criteria coordinate C58 corresponding to the twenty-fourth tag T24, as a second merged electrode removal section RM2.

The leading removal criteria coordinate C51 may be coordinate leading by a predetermined length a from the tag coordinates of the twenty-first tag T21. The following removal criteria coordinate C58 may be coordinate following by a predetermined length a from the tag coordinates of the twenty-fourth tag T24. In some embodiments, the length of the second merged electrode removal section RM2 may be a length of the distance between the twenty-first tag T21 and the twenty-fourth tag T24 added to 2a.

The leading removal criteria coordinate C51 may be leading to the most following removal criteria coordinate C10 of the first merged electrode removal section RM1 for the first defect F1. The following removal criteria coordinate C58 may be following the most following removal criteria coordinate C10 of the first merged electrode removal section RM1 for the first defect F1.

The second merged electrode removal section RM2 may overlap the first merged electrode removal section RM1 and the electrode E1 by a predetermined length in the longitudinal direction of the electrode E1, in other words, a portion of the second merged electrode removal section RM2 overlaps the first merged electrode removal section RM1, and a portion of the first merged electrode removal section RM1 overlaps the second merged electrode removal section RM2.

As shown in C of FIG. 13, an updated merged electrode removal section RM' may be defined by merging the first merged electrode removal section RM1 and the second merged electrode removal section RM2.

In the second merged electrode removal section RM2, an updated merged electrode removal section RM' may be obtained by adding a non-overlapping section R5i, which is a non-overlapping section with the first merged electrode removal section RM1, to the first merged electrode removal section RM. In some embodiments, the most leading removal criteria coordinate C1 in the first merged electrode removal section RM1 may be selected as the leading removal criteria coordinate of the updated merged electrode removal section RM'. In addition, the most following removal criteria coordinate C58 of the second merged electrode removal section RM2 may be selected as a following removal criteria coordinate of the updated merged electrode removal section RM'.

As a result, the section between the leading removal criteria coordinate C1 of the first merged electrode removal section RM1 and the second merged electrode removal section RM2, which is the most leading removal criteria coordinate of the first merged electrode removal section RM1, and the following removal criteria coordinate C58 of the second merged electrode removal section RM2, which is the most following removal criteria coordinate of the second merged electrode removal section RM2, may comprise an updated merged electrode removal section RM'. The updated merged electrode removal section RM' may be overall removed from the electrode E1. The roll map creating device may create a roll map of the surviving electrode S with the merged electrode removal section RM' removed from the electrode E1.

The electrode between the leading removal criteria coordinates C1 and the following removal criteria coordinates C58 of the merged electrode removal section RM' in the physical electrode may be cut and discarded, and the ends of the leading removal criteria coordinate C1 and the following removal criteria coordinate C58 may be bonded to each other.

As above, although embodiments of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of embodiments of the present disclosure will not depart from the technology of the present disclosure.

## Claims

1. A battery manufacturing system, comprising:
an electrode process device configured to perform an electrode process; and
a roll map creating device configured to create a roll map comprising coordinate value data indicating locations on an electrode and measurement and inspection data generated as the electrode process is performed on the electrode and matched to the coordinate value data,
wherein the roll map creating device is configured to receive an input of a defect location of the electrode and generate tag coordinates of a tag corresponding to the defect location, and
the roll map creating device is configured to define, based on the tag coordinates, a leading removal criteria coordinate leading to the tag coordinates and a following removal criteria coordinate following the tag coordinates, and create a surviving electrode roll map excluding an electrode removal section between the leading removal criteria coordinate and the following removal criteria coordinate.

2. The battery manufacturing system of claim 1, wherein a leading first tag and a following second tag are present on the electrode based on a direction of progress of the electrode process,
wherein the roll map creating device is configured to define a section between a leading removal criteria coordinate of the first tag and a following removal criteria coordinate of the second tag as a merged electrode removal section when the first electrode removal section corresponding to the first tag and the second electrode removal section corresponding to the second tag at least partially overlap.

3. The battery manufacturing system of claim 2, wherein a third tag following the second tag is present on the electrode,
wherein the roll map creating device is configured to update the merged electrode removal section by merging a third electrode removal section to the merged electrode removal section when the third electrode removal section corresponding to the third tag overlaps at least partially with the merged electrode removal section.

4. The battery manufacturing system of claim 2, wherein a third tag following the merged electrode removal section is present on the electrode,
wherein the roll map creating device is configured to update the merged electrode removal section by merging a third electrode removal section to the merged electrode removal section when the third electrode removal section corresponding to the third tag overlaps at least partially with the merged electrode removal section.

5. The battery manufacturing system of claim 1, wherein when an attribute of an electrode defect is continuousness, the roll map creating device is configured to assign tags at a predetermined interval while the continuous defect lasts.

6. The battery manufacturing system of claim 5, wherein the predetermined interval is within a distance between a following removal criteria coordinate and a leading removal criteria coordinate assigned to one tag coordinate.

7. The battery manufacturing system of claim 1, wherein the electrode process is a roll-press process.

8. A battery manufacturing system, comprising:
an electrode process device configured to perform an electrode process;
a roll map creating device configured to create a roll map that comprises coordinate value data indicating locations on an electrode and measurement and inspection data generated as the electrode process is performed on the electrode and matched to the coordinate value data; and
a measuring instrument configured to capture images of the electrode to identify defect locations,
wherein the roll map creating device is configured to receive defect locations from the measuring instrument and calculate an electrode removal section,
wherein the measuring instrument is configured to assign a tag to a location where a defect occurred when an attribute of the defect found on the electrode is a point defect in a direction of progress of the electrode, and when the attribute of the defect found on the electrode is a continuous defect, the measuring instrument is configured to assign tags at a predetermined interval while the continuous defect lasts.

9. The battery manufacturing system of claim 8, wherein the roll map creating device is configured to define a leading removal criteria coordinate leading to a tag coordinate of the tag and a following removal criteria coordinate following the tag coordinate when the attribute of the defect is a point defect, and configured to define a section between the leading removal criteria coordinate and the following removal criteria coordinate as an electrode removal section.

10. The battery manufacturing system of claim 9, wherein the roll map creating device is configured to define a merged electrode removal section by merging a non-overlapping section of any one of two electrode removal sections to the other electrode removal section when the electrode removal section overlaps another defective electrode removal section.

11. The battery manufacturing system of claim 8, wherein the roll map creating device is configured to define leading removal criteria coordinate leading to tag coordinates of the most leading tags and following removal criteria coordinate following tag coordinates of the most following tags assigned at predetermined intervals when the attribute of the defect is a continuous defect, and configured to define a section between the leading removal criteria coordinate and the following removal criteria coordinate as the merged electrode removal section.

12. The battery manufacturing system of claim 11, wherein, when one or more other defects are identified in addition to the continuous defect within the merged electrode removal section, the roll map creating device is configured to calculate an electrode removal section for each of the one or more other defects.

13. The battery manufacturing system of claim 12, wherein by merging a non-overlapping section of the calculated electrode removal section for each of the one or more other defects with the merged electrode removal section, the roll map creating device is configured to update the merged electrode removal section.

14. The battery manufacturing system of claim 11, wherein the roll map creating device is configured to update the merged electrode removal section of continuous defects by merging a non-overlapping section of the other defect electrode removal section with the merged electrode removal section of continuous defects when the other defect electrode removal section overlaps the merged electrode removal section of continuous defects.

15. The battery manufacturing system of claim 11, wherein the roll map creating device is configured to define a new merged electrode removal section by merging a non-overlapping section of the merged electrode removal section of the other defects with the merged electrode removal section of continuous defects when the merged electrode removal section of the other defects overlaps the merged electrode removal section of continuous defects.

16. A battery manufacturing method, comprising:
generating tag coordinates of tag corresponding to defect locations on an electrode; and
defining a leading removal criteria coordinate leading to a tag coordinate and a following removal criteria coordinate following the tag coordinate, and creating a surviving electrode roll map that excludes an electrode removal section between the leading and following removal criteria coordinates.

17. The battery manufacturing method of claim 16, wherein creating of the surviving electrode roll map further comprises:
when a leading first tag and a following second tag are present on the electrode based on a direction of progress of the electrode process, and when the first electrode removal section corresponding to the first tag and the second electrode removal section corresponding to the second tag at least partially overlap, defining a section between a leading removal criteria coordinate of the first tag and a following removal criteria coordinate of the second tag as a merged electrode removal section.

18. The battery manufacturing method of claim 16, wherein creating of the surviving electrode roll map further comprises, when a third tag following the merged electrode removal section is present on the electrode and when the third electrode removal section corresponding to the third tag overlaps at least partially with the merged electrode removal section, updating the merged electrode removal section by merging the third electrode removal section with the merged electrode removal section.
